# EUROPEAN PATENT APPLICATION

(11) **EP 4 636 646 A1**
(43) Date of publication of application: **22.10.2025**
(21) Application number: 25164080.1
(22) Date of filing: 17.03.2025
(51) Int. Cl.: G06N 3/045, G06N 3/0442, G06N 3/0464, G06N 3/048, G06N 3/084, G06N 3/09, G06N 3/0475

(54) **MULTI-MODEL MACHINE LEARNING FOR ROOT CAUSE ANALYSIS USING SALIENCY MAPS**

(30) Priority: 10.04.2024 US 202418631114
(71) Applicant: GE Vernova Technology GmbH, 5400 Baden (CH)
(72) Inventor: HUANG, Hao, Johns Creek, 30022 (US); KARIGIANNIS, John, Montreal, H3B 2E3 (CA); SHAH, Tapan Ravin, Los Altos, 94024 (US); EVANS, Scott Charles, Niskayuna, 12309 (US)
(74) Representative: Rüger Abel Patentanwälte PartGmbB

(57) **Abstract**

Systems and methods are provided. A method includes providing, by a computing system comprising one or more computing devices, a plurality of input values to a first machine-learned model. The method includes generating, by the computing system using the first machine-learned model based on the plurality of input values, a saliency map. In the method, the first machine-learned model is a model that was trained to predict a prediction residual associated with a second machine-learned model.

## Description

### FIELD

The present disclosure relates generally to machine learning. More particularly, the present disclosure relates to systems and methods for using two or more machine-learned models to perform machine-learned root cause analysis.

### BACKGROUND

Machine learning is a computer-implemented process in which a computer can iteratively "learn" based on training data. For example, a training input can be provided to a computing system, which can perform a plurality of operations on the training input to generate a training output. The plurality of operations can include parametrized operations, wherein an operation is based at least in part on an adjustable parameter. A computing system can evaluate one or more training outputs and can adjust one or more parameters based on the evaluation. This process can be repeated for a plurality of training iterations. The plurality of operations or the adjusted parameters that are "learned" during the training process can be referred to as a machine-learning model or machine-learned model.

Root cause analysis is an analysis of one or more events to determine a root cause of the one or more events. For example, an event of interest (e.g., industrial fault, machine-learned prediction error, anomalous event, etc.) can have one or more causes, and in some instances the causes of the event of interest may be events themselves, having causes of their own. A chain of such causes and events can be called a causal chain. In some instances, a beginning or root of a causal chain can be called a root cause.

### BRIEF DESCRIPTION

Aspects and advantages of systems and methods in accordance with the present disclosure will be set forth in part in the following description, or may be obvious from the description, or may be learned through practice of the technology.

In accordance with one embodiment, a method is provided. The method includes providing, by a computing system comprising one or more computing devices, a plurality of input values to a second machine-learned model. The method includes generating, by the computing system using the second machine-learned model based on the plurality of input values, a saliency map. In the operations, the second machine-learned model is a model that was trained to predict a prediction residual associated with a first machine-learned model.

In accordance with another embodiment, a computing system is provided. The computing system includes one or more processors. The computing system includes one or more non-transitory computer-readable media that collectively store instructions that, when executed by the one or more processors, cause the computer system to perform operations. The operations include providing a plurality of input values to a second machine-learned model. The operations include generating, using the second machine-learned model based on the plurality of input values, a saliency map. In the operations, the second machine-learned model is a model that was trained to predict a prediction residual associated with a first machine-learned model.

In accordance with another embodiment, one or more non-transitory computer-readable media are provided. The non-transitory computer-readable media store instructions that, when executed by one or more processors, cause the one or more processors to perform operations. The operations include providing a plurality of input values to a second machine-learned model. The operations include generating, using the second machine-learned model based on the plurality of input values, a saliency map. In the operations, the second machine-learned model is a model that was trained to predict a prediction residual associated with a first machine-learned model.

These and other features, aspects and advantages of the present systems and methods will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present systems and methods, including the best mode of making and using the present systems and methods, directed to one of ordinary skill in the art, is set forth in the specification, which makes reference to the appended figures, in which:
FIG. 1A is a block diagram of a first aspect of an example system for training machine-learned models in accordance with embodiments of the present disclosure;
FIG. 1B is a block diagram of a second aspect of an example system for training machine-learned models in accordance with embodiments of the present disclosure;
FIG. 2 is a block diagram of an example machine-learned model in accordance with embodiments of the present disclosure;
FIG. 3 is a block diagram of an example system for generating saliency maps in accordance with embodiments of the present disclosure;
FIG. 4 is a block diagram of an example industrial application of root cause analysis in accordance with embodiments of the present disclosure;
FIG. 5 is an illustration of example time series data in accordance with embodiments of the present disclosure;
FIG. 6 is a flowchart diagram of an example method in accordance with embodiments of the present disclosure;
FIG. 7 is a block diagram of an example computing system in accordance with embodiments of the present disclosure.

### DETAILED DESCRIPTION

Reference now will be made in detail to embodiments of the present systems and methods, one or more examples of which are illustrated in the drawings. Each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components.

Terms of approximation, such as "about," "approximately," "generally," and "substantially," are not to be limited to the precise value specified. In at least some instances, the approximating language may correspond to the precision of an instrument for measuring the value, or the precision of the methods or machines for constructing or manufacturing the components and/or systems. In at least some instances, the approximating language may correspond to the precision of an instrument for measuring the value, or the precision of the methods or machines for constructing or manufacturing the components and/or systems. For example, the approximating language may refer to being within a 1, 2, 4, 5, 10, 15, or 20 percent margin in either individual values, range(s) of values and/or endpoints defining range(s) of values. When used in the context of an angle or direction, such terms include within ten degrees greater or less than the stated angle or direction. For example, "generally vertical" includes directions within ten degrees of vertical in any direction, e.g., clockwise or counter-clockwise.

The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

As used herein, the term "line" may refer to a pipe, hose, tube, or other fluid carrying conduit.

### Overview

The present disclosure is generally directed to systems and methods for machine-learned root cause analysis. More particularly, the present disclosure is directed to systems and methods for using two or more machine-learned models to perform root cause analysis using saliency maps. A saliency map can be, for example, a data structure indicating which inputs to a machine-learned model have the biggest impact on an output of the machine-learned model (i.e., which inputs are the most "salient").

In some embodiments, a first machine-learned model can be trained to predict a value of interest (e.g., industrial process data, sensor data, etc.). The trained first model can be used to generate training data for a second machine-learned model. More particularly, the trained first model can generate a plurality of predictions, which can be compared to (e.g., subtracted from, etc.) a plurality of ground truth values to generate a plurality of prediction residuals (e.g., prediction errors). A second machine-learned model can be trained, using the plurality of prediction residuals, to predict an expected prediction residual of the first machine-learned model.

Using the second machine-learned model, root cause analysis can be performed. For example, inputs can be provided to the second machine-learned model, and a saliency map can be generated. The saliency map can indicate which inputs to the second machine-learned model contribute most to increasing an expected prediction residual associated with the first machine-learned model. These salient inputs can be considered likely root causes of a high prediction error of the first machine-learned model, or likely root causes of a condition associated with a high prediction error.

In some example applications, such a two-model architecture can be used for root cause analysis of industrial faults. For example, a first machine-learned model can be trained using data associated with normal operation of an industrial process. A second machine-learned model can be trained using data associated with both normal operation of the industrial process and anomalous (e.g., faulty) operation of the industrial process. In some instances, a high-absolute-value prediction residual of the first machine-learned model, which was trained on normal-operation data, can be associated with an operating anomaly (e.g., industrial fault). In such instances, a saliency map of the second machine-learned model can be used to identify one or more root causes of the anomaly.

In some embodiments, input data and training data can include time series data. In some embodiments, input data and training data can include data having a plurality of input channels. For example, input data and training data can include time series data associated with a plurality of timestamps, with each timestamp being associated with a plurality of input values for a plurality of input channels (e.g., associated with a plurality of industrial sensors, measurements, etc.). In some instances, time series data can be input to a second machine-learned model as a sliding time window having a width of *t* timestamps with *m* input channels per timestamp.

In some instances, the second machine-learned model can have an architecture (e.g., temporal convolutional network, etc.) configured to enable isolation or extraction of channel-wise saliencies (e.g., contributions to increasing an expected absolute value of a prediction residual of the first machine-learned model) associated with each input channel. In some instances, a second-model architecture can include one or more channel-wise layers (e.g., convolutional layers, etc.), and one or more inter-channel layers (e.g., convolutional layers, fully connected layers, etc.). For example, a channel-wise layer can comprise a plurality of operations, with each operation receiving, as input, a plurality of input values from a single input channel and generating one or more outputs based solely on inputs from that input channel. In this manner, for instance, channel-wise saliencies can be preserved through one or more layers, and channel-wise explainability can be improved compared to alternate model architectures.

A saliency map (e.g., channel-wise saliency map) can be generated in any appropriate way (e.g., using gradient-based methods, deconvolution methods, etc.). In some instances, a saliency map can be generated by reversing one or more operations associated with one or more inter-channel layers. For example, a second machine-learned model can process a plurality of input values using a channel-wise layer and an inter-channel layer to generate an embedding. Each layer can include, for example, a plurality of weights and one or more non-linear activation functions (e.g. ReLU, etc.). Generating a saliency map can further include, for example, processing the embedding based on a transposed weight matrix comprising weights of the inter-channel layer, such that a weight operation of the inter-channel layer is reversed.

In some instances, an activation function may be configured to output zero for some input values, such that an embedding may include a plurality of zero-valued outputs of the inter-channel layer and a plurality of nonzero-valued outputs of the inter-channel layer. In this manner, for instance, channel-wise saliencies can be determined by converting nonzero-valued outputs of an inter-channel layer into channel-wise contributions to the nonzero-valued outputs, while ignoring contributions to inter-channel nodes having a zero-valued output. However, zero-valued outputs are not required. For example, reversing an inter-channel weighting can proportionately convert a plurality of smaller and larger outputs of an inter-channel layer into channel-wise contributions to the smaller and larger outputs.

In some instances, an architecture of the first model can be the same as or different from an architecture of the second model. For instance, in some example experiments according to the present disclosure, both the first and second machine-learned models were temporal convolutional networks having identical architectures. However, any appropriate model architecture can be used for the first machine-learned model, provided that the first machine-learned model can generate a suitable prediction of a value of interest (e.g., prediction of normal operating behavior of an industrial system, etc.).

In some example applications, a saliency map of the second machine-learned model can be used to take actions or recommend actions to identify, prevent, or correct a root cause. For example, in applications associated with industrial faults, a computing system can identify, based on a saliency map, a root cause of a past or expected future industrial fault; and recommend, based on the identified root cause, a maintenance action (e.g., repair, inspection, etc.) to correct or prevent the fault. In some instances, the computing system can automatically take action to correct or prevent the fault. In other applications, a computing system can identify, based on a saliency map, a root cause of an anomalous event or a machine-learned prediction error; determine, based on the root cause, a corrective action; and take the corrective action.

Systems and methods according to example aspects of the present disclosure can provide a variety of technical effects and benefits. For example, in some instances, provided systems and methods can provide improved accuracy in identifying root causes compared to alternate systems and methods. As another example, in some instances, provided systems and methods can provide improved accuracy in detecting industrial process anomalies compared to alternate systems and methods. In some instances, provided systems and methods can provide similar accuracy at a reduced computational cost compared to alternate systems and methods. Additionally, provided machine learning architectures (e.g., provided temporal convolutional networks) may in some instances provide additional advantages, such as advantages in parallel processing, adaptability, scalability, and mitigated vanishing gradient issues compared to some alternative model architectures. In this manner, for instance, example systems and methods according to aspects of the present disclosure can improve the functioning of a computing system itself. Additionally, enhanced accuracy of fault detection and root cause detection can in some instances improve operational reliability of an industrial process, minimize downtime, prevent damage to industrial components, reduce maintenance costs, or provide data for informed decision-making with respect to future industrial processes across a variety of industrial domains.

In example experiments according to the present disclosure, provided systems and methods were compared to alternate systems and methods for root cause analysis and anomaly detection. In the experiments, systems and methods according to example aspects of the present disclosure provided improved accuracy compared to alternative methods. For example, in experiments where each tested system ranked a plurality of input channels from 1 (most likely to be a root cause) to 51 (least likely to be a root cause), provided systems and methods gave the true root causes an average rank of 1.99, compared to 8.59 for the best-performing alternate implementation tested and 15.98 for the worse-performing alternate implementation tested. In some instances, an accuracy advantage of provided systems and methods was particularly strong in experiments where a small input deviation associated with a true root cause led to large symptomatic input deviations in downstream channels. Thus, provided systems and methods can in some instances overcome the shortcomings of traditional single-model or deviation-based approaches, which may not properly distinguish causal deviations from symptomatic deviations. In additional example experiments involving an anomaly detection task, provided systems and methods achieved an area under a precision-recall curve of 0.9315, compared to 0.9305 for the best-performing alternative implementation tested and 0.9240 for the worst-performing alternative implementation tested.

Additionally, it will be appreciated that performance of a machine-learned model can in some instances be correlated with a computational cost associated with the model. For example, in some instances, increasing a size (e.g., number of parameters, etc.) or complexity of a machine-learned model can increase a performance while also increasing a computational cost (e.g., training cost, inference cost, etc.) of the model. Similarly, decreasing a size of the machine-learned model can reduce a computational cost (e.g., electricity cost, memory cost, etc.) associated with the machine-learned model, while also decreasing a performance (e.g., root cause identification accuracy, etc.) of the model. As another example, decreasing a size of a training dataset (e.g., number of training iterations, etc.) can reduce a computational cost (e.g., electricity cost, memory cost, etc.) associated with training the machine-learned model, while also decreasing a performance (e.g., root cause identification accuracy, etc.) of the model. It will be appreciated, therefore, that systems and methods that can provide increased accuracy at a similar computational cost compared to alternative methods can also be configured (e.g., by reducing a size of the model, etc.) to provide similar accuracy at a reduced computational cost compared to alternative methods. In this manner, for instance, provided systems and methods can provide similar technical performance at a reduced computational cost compared to alternative methods, thereby improving the functioning of computing technology.

### Example Systems

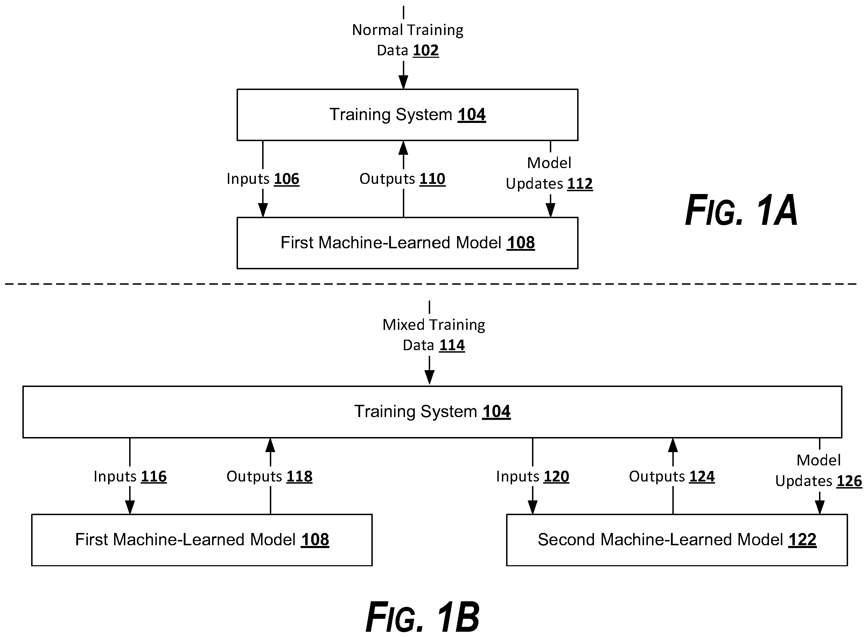

Referring now to the drawings, FIGS. 1A and 1B depict block diagrams of two views of an example system for training a machine-learned model according to example aspects of the present disclosure. FIG. 1A depicts a first machine-learned model 108 being trained, and FIG. 1B depicts a second machine-learned model 122 being trained based on prediction residuals of the first machine-learned model 108. In some embodiments, a trained second machine-learned model 122 can be used for root cause analysis, as further described below with respect to other figures.

FIG. 1A depicts a first machine-learned model 108 being trained. A training system 104 can provide inputs 106 to a first machine-learned model 108 based on a dataset comprising normal (e.g., non-anomalous) training data 102. Based on the inputs 106, the first machine-learned model 108 can generate outputs 110. Based on the outputs 110 and the normal training data 102, the training system 104 can provide model updates 112 to train the first machine-learned model 108.

Normal training data 102 can generally include or otherwise represent various types of data (e.g., numerical, binary, sensor data, audio, visual, text, etc.). Normal training data 102 can include one type or many different types of data. In some instances, normal training data 102 can include time series data (e.g., comprising data from a plurality of timestamps). In some instances, normal training data 102 can include multi-channel data having a plurality of input channels. In some instances, an input channel can include a measurement channel (e.g., associated with a metric, sensor, gauge, industrial measurement, etc.). In some instances, an input channel can include a control channel (e.g., associated with a control valve, actuator, computerized control device, etc.). In some instances, normal training data 102 can include data associated with expected or non-anomalous behavior (e.g., of one or more systems, etc.). For example, normal training data 102 can include data associated with non-anomalous behavior of an industrial process (e.g., normal operating behavior, etc.), industrial system, business process or system, human process or system, machine-learned process or system, natural physical process or system, etc. In some instances, normal training data 102 can include other non-anomalous data (e.g., data associated with non-anomalous language examples, etc.).

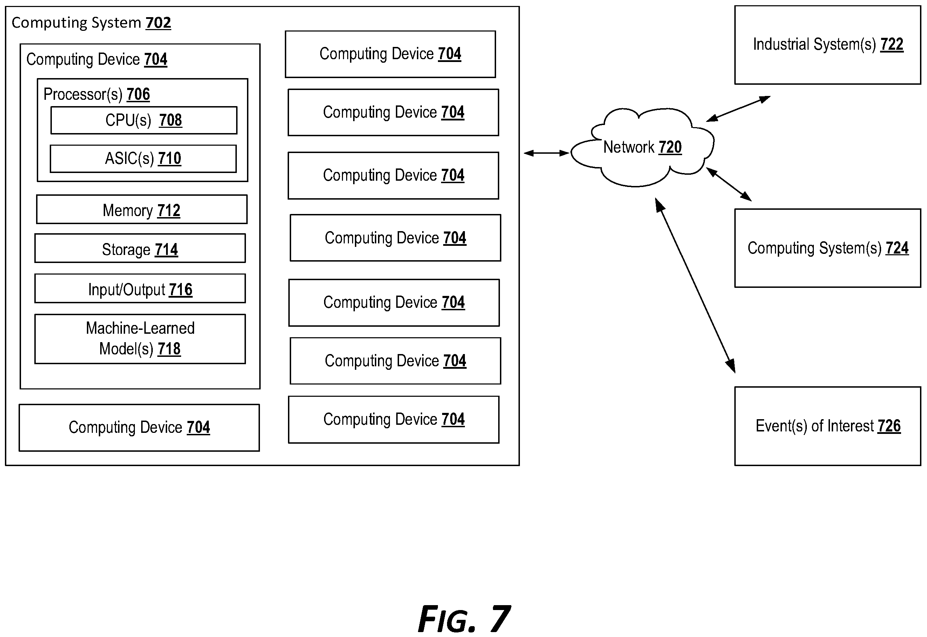

A training system 104 can be or include one or more software, firmware, or hardware components configured to process normal training data 102, outputs 110, mixed training data 114, outputs 118, and outputs 124, and generate model updates 112 and 126. In some instances, a training system 104 can be or include one or more computing systems or computing devices, such as a computing system depicted below with respect to FIG. 7 (e.g., computing system 702, computing device 704, computing system(s) 724, etc.).

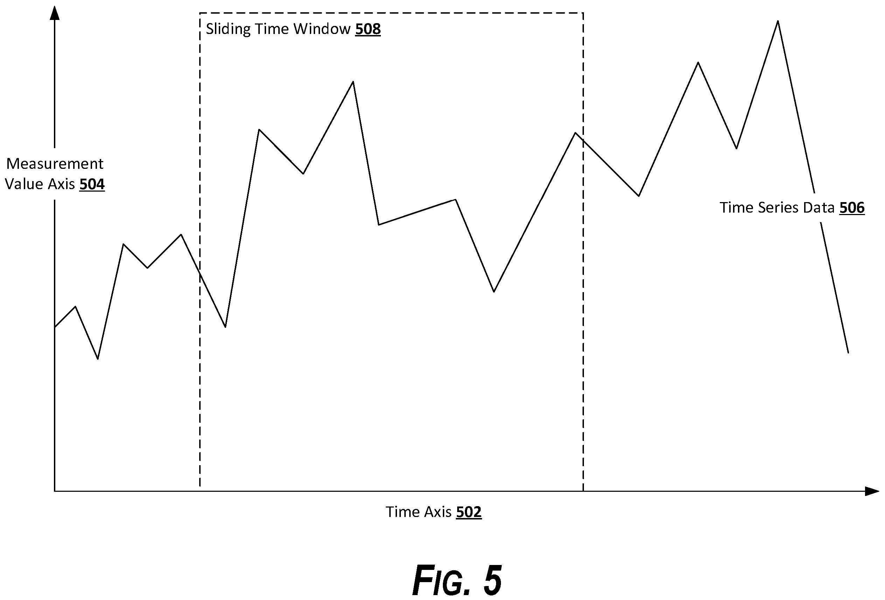

Inputs 106 can generally include or otherwise represent various types of data. In some instances, inputs 106 can include normal training data 102 or otherwise share one or more properties with normal training data 102. For example, an input 106 can have any property described above with respect to normal training data 102. In some instances, a training system 104 can process a training example of normal training data 102 to extract an input 106 with a plurality of input channels, and an expected output or ground-truth output to be compared to an output 110. In some instances, an input 106 can include time series data. In some instances, time series data can include data associated with a fixed number of timestamps, such as time series data associated with a sliding time window. An example embodiment of input 106 data is further described below with respect to FIG. 5.

A first machine-learned model 108 can include one or more machine-learned models. The first machine-learned model 108 can include various model architectures. In some instances, an example model architecture for first machine-learned model 108 can include a sequence processing model architecture (e.g., convolutional neural network, recurrent neural network, long short-term memory, selective structured state space model, transformer, etc.). For example, the first machine-learned model 108 can be configured to receive an input sequence and generate an output prediction (e.g., numerical prediction value, sequence prediction, etc.). For instance, the first machine-learned model 108 can be configured to generate an output predicting a value of interest based on an input sequence. In some instances, a first machine-learned model 108 can have an architecture that is the same as or different from a second machine-learned model 122. For example, in principle, any machine-learned model that can provide a prediction (e.g., accurate or high-quality prediction, etc.) associated with normal training data 102 can be used.

An output 110 can be a value (e.g., prediction) generated by the first machine-learned model 108 based on an input 106. An output 110 can generally include or otherwise represent various types of data. In some instances, an output 110 can be, include, or otherwise be associated with one or more numerical data components to be compared to a ground truth value to determine a prediction residual (e.g., prediction error, etc.). For example, an output 110 can include a numerical prediction; a plurality of numerical predictions; class predictions comprising numerical probability values assigned to each class; binary class predictions configured to be compared to a numerical (e.g., floating-point) ground truth value; text predictions configured to be compared to a ground truth value based on a numerical metric (e.g. Levenstein edit distance, etc.); or any other prediction configured to be compared to a ground truth value to determine a numerical prediction residual. In some instances, an output 110 can be associated with time series data (e.g., associated with a particular time stamp or particular time window of a time series, etc.). In some instances, an output 110 can share one or more properties with normal training data 102 or its components. For example, normal training data 102 can include one or more expected outputs or ground-truth outputs to be compared to an output 110. Such expected outputs can have a data type that is similar to (e.g., same as) or different from a data type of an output 110. In some instances, an output 110 can have any property described above with respect to normal training data 102.

Model updates 112 can include, for example, updates to one or more parameters of the first machine-learned model 108. For example, the model update(s) 112 can include updating one or more parameters of the first machine-learned model 108 to optimize a value of an objective. Optimizing an objective can include minimizing the value of a loss function, such as a difference (e.g., absolute difference, squared difference, etc.) between an output 110 and an expected output or ground truth output associated with the inputs 106 used to generate the output 110. Such a difference can be referred to as a prediction residual. In this manner, for instance, the training system 104 can train the first machine-learned model 108 to more accurately predict one or more expected outputs associated with the normal training data 102.

The model update(s) 112 can include various training or learning techniques, such as, for example, backwards propagation. For example, the evaluation signal can be backpropagated from the output (or another source of the objective function) through the first machine-learned model 108 to update one or more parameters of the first machine-learned model 108 (e.g., based on a gradient of the evaluation signal with respect to the parameter value(s)). In some instances, system(s) containing one or more machine-learned models can be trained in an end-to-end manner. Gradient descent techniques can be used to iteratively update the parameters over a number of training iterations. In some implementations, performing backwards propagation of errors can include performing truncated backpropagation through time. In some instances, training a first machine-learned model 108 can include implementing a number of generalization techniques (e.g., weight decays, dropouts, etc.) to improve the generalization capability of the first machine-learned model 108 being trained. Various objective functions can be used for the model updates 112, such as mean squared error, likelihood loss, cross entropy loss, hinge loss, contrastive loss, or various other loss functions.

FIG. 1B depicts a second machine-learned model 122 being trained based at least in part on outputs 118 of the first machine-learned model 108. A training system 104 can receive a dataset comprising mixed (e.g., anomalous and non-anomalous) training data 114 and provide inputs 116 to a first machine-learned model 108, which can generate outputs 118 based on the inputs 116. The training system 104 can determine, based on a comparison between the outputs 118 and one or more ground truth values of the mixed training data 114, a prediction residual associated with the outputs 118. The training system 104 can then provide inputs 120 to the second machine-learned model 122, which can generate outputs 124 based on the inputs. Based on the outputs 124 and a prediction residual associated with the outputs 118, the training system 104 can provide model updates 126 to train the second machine-learned model 122.

In many respects, a method for training a second machine-learned model 122 can be similar to (e.g., same as) a method for training a first machine-learned model 108 as described above with respect to FIG. 1A. However, instead of being trained to predict an expected output or ground-truth output associated with the normal training data 102, the second machine-learned model 122 can be trained to predict a prediction residual (e.g., prediction error, prediction loss, etc.) associated with an output 118 of the first machine-learned model 108. In some instances, the second machine-learned model 122 can also be trained using data (e.g., mixed training data 114) that is different from data (e.g., normal training data 102) used to train the first machine-learned model 108. For example, in some instances, the first machine-learned model 108 can be trained solely on non-anomalous data, and the second machine-learned model 122 can be trained on a mixture of anomalous and non-anomalous data.

Mixed training data 114 can include, for example, normal data 102 and other data. In some instances, mixed training data 114 can include data having any property (e.g., data types, time series, multi-channel, etc.) described above with respect to normal data 102. In some instances, mixed training data can include both anomalous and non-anomalous data. For example, mixed training data 114 can include normal training data 102 associated with expected or non-anomalous behavior (e.g., of one or more systems, etc.), along with data associated with corresponding anomalous behavior (e.g., of a same or similar system, etc.). For example, mixed training data 114 can include normal training data 102 associated with non-anomalous behavior of an industrial process (e.g., normal operating behavior, etc.), industrial system, business process or system, machine-learned process or system, natural physical process or system, human process or system, etc.; and additional data associated with anomalous behavior of a similar or same process or system. In some instances, mixed training data 114 can include normal training data 102 comprising other non-anomalous data (e.g., data associated with non-anomalous language examples, etc.), and can further include related anomalous data.

Inputs 116 can be, include, or otherwise share one or more properties with inputs 106. For example, an input 116 can have any property described above with respect to an input 106 or normal training data 102. Additionally, inputs 116 can include inputs associated with anomalous data, such as input training examples associated with mixed training data 114.

Outputs 118 can be, include, or otherwise share one or more properties with outputs 110. For example, an output 118 can have any property described above with respect to an output 110.

Inputs 120 can be, include, or otherwise share one or more properties with inputs 116. For example, in each training iteration, an input 120 can be similar to (e.g., same as) an input 116. For example, in instances where the first machine-learned model 108 and second machine-learned model 122 are configured to take the same number and type of inputs (e.g., same number of input channels in a multi-channel input; same number of timestamps in a sliding time window associated with a time series input; etc.), the input 120 can be (or otherwise be identical to) the input 116 at each training iteration. Additionally, an input 120 can have any property described above with respect to an input 106 or normal training data 102.

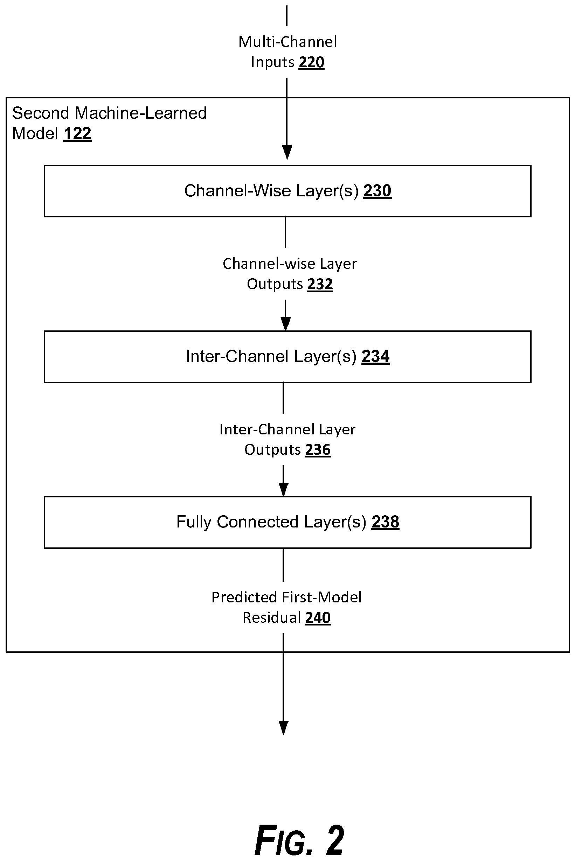

A second machine-learned model 122 can include one or more machine-learned models. The second machine-learned model 122 can include various model architectures. In some instances, an example model architecture for second machine-learned model 122 can include a sequence processing model architecture (e.g., convolutional neural network, recurrent neural network, long short-term memory, selective structured state space machine, transformer, etc.). For example, the second machine-learned model 122 can be configured to receive an input sequence and generate an output prediction (e.g., numerical prediction value, etc.). For instance, the second machine-learned model 122 can be configured to generate an output predicting, based on an input sequence, a prediction residual of the first machine-learned model 108. In some instances, a second machine-learned model 122 can have an architecture that is the same as or different from a first machine-learned model 108. In some instances, a second machine-learned model 122 can be or include a temporal convolutional network. Other architectures are possible. For example, in principle, any model architecture that preserves a degree of explainability (e.g., channel-wise explainability) through one or more layers can be used without deviating from the scope of the present disclosure. Example details of an example architecture for a second machine-learned model 122 are further provided below with respect to FIG. 2.

Outputs 124 can be, for example, outputs configured to predict a prediction residual associated with the first machine-learned model 108. For instance, a prediction residual of the first machine-learned model 108 can include one or more numerical values (e.g., numerical metrics indicative of prediction error, etc.), and outputs 124 can include one or more numerical values having a similar (e.g., same) format compared to the prediction residual. For example, in instances where an output 110, 118 is a single-channel or single-prediction output, an output 124 may be a single numerical (e.g., floating-point, etc.) value. In instances where an output 110, 118 comprises multiple values (e.g., multiple class probabilities, etc.), an output 124 can be a single value (e.g., based on an aggregate metric indicative of an overall prediction residual) or can include a plurality of values (e.g., predicting a plurality of class-wise prediction residuals, etc.)

Model updates 126 can include, for example, updates to one or more parameters of the second machine-learned model 122. For example, the model update(s) 126 can include updating one or more parameters of the first machine-learned model 108 to optimize a value of an objective, such as a loss function. In particular, optimizing an objective can include minimizing the value of a loss function comprising a difference between an output 124 and a prediction residual associated with a corresponding output 118. For example, training the second machine-learned model 122 can include, at each iteration of a plurality of training iterations: selecting, from mixed training data 114, an input 116; providing the input 116 to the first machine-learned model 108 and receiving an output 118 based on the input 116; determining, based on the output 118 and a ground truth value associated with the mixed training data 114, a prediction residual associated with the output 118; providing the input 116 to the second machine-learned model 122 and receiving an output 124 based on the input 116; and performing a model update 126 configured to reduce a loss function comprising a difference between the output 124 and the prediction residual. Determining a prediction residual can include, for example, subtracting an output 118 from an expected value or ground truth value (e.g., included in mixed training data 114) to determine a difference. In some instances, determining a prediction residual can include performing an operation (e.g., absolute value, square, etc.) to convert the difference to a non-negative value. In other respects, model updates 126 can be similar to (e.g., same as) model updates 112. For example, model updates 126 can have any property (e.g., backpropagation, loss function, generalization, etc.) described above with respect to model updates 112. In this manner, for instance, the training system 104 can train the second machine-learned model 108 to more accurately predict a prediction residual associated with the first machine-learned model 108.

FIG. 2 is a block diagram showing an example model architecture for a second machine-learned model 122. The second machine-learned model 122 can receive multi-channel inputs 220 and process the inputs 220 with one or more channel-wise layers 230 to generate a plurality of channel-wise outputs 232. The second machine-learned model 122 can process the channel-wise outputs 232 with one or more inter-channel layers 234 to generate a plurality of inter-channel outputs 236. The second machine-learned model 122 can process the inter-channel outputs 236 with one or more fully connected layers 238 to generate a final output, which can in some instances (e.g., when trained according to FIGS. 1A-B) correspond to an expected prediction residual 240 of a first machine-learned model 108.

Multi-channel inputs 220 can be, include, or otherwise share one or more properties with inputs 120. For example, multi-channel inputs 220 can have any property described above with respect to inputs 120. In some instances, multi-channel inputs 220 can have a plurality of input channels, with each input channel being associated with one or more (e.g., a plurality of) input values. A channel can include, for example, a logical grouping of two or more inputs. For example, in some instances, multi-channel inputs 220 can include time series data comprising a plurality of *t* timestamps, with each timestamp comprising a plurality of *m* measurement values associated respectively with m measurement channels. As a non-limiting illustrative example, an industrial process can be monitored by *m* sensors, *m* groups of sensors, *m* data loggers, or the like, and each measurement channel can consist of *t* values (e.g., *t* measurements, *t* logged data points, *t* aggregate values each determined based on a plurality of measurements, etc.) associated with a particular sensor, group of sensors, etc. over t time steps. However, other channel types are possible. In some instances, a grouping associated with each channel can correspond to one or more similarities, shared properties, or other relationships between inputs of the channel. In some instances, one or more channels of interest can be defined based on one or more explainability goals. As a non-limiting illustrative example, a second machine-learned model 122 could be configured to identify a time stamp at which an anomaly first occurred by treating each time stamp as a channel. As another non-limiting illustrative example, if an explainability goal includes narrowing a root cause down to a particular machine or to a condition detectable by a particular sensor, then channels can be grouped such that each channel is associated with a plurality of input values from one machine or one sensor (e.g., *t* input values over a plurality of *t* timestamps, etc.).

A channel-wise layer 230 can include or correspond to, for example, a plurality of nodes, filters (e.g., convolutional filters or kernels), or other operations, wherein each operation of the channel-wise layer 230 can be configured to receive inputs from only one input channel, and to generate an output value based on the inputs from the only one input channel. In some instances, a channel-wise layer 230 can include one or more nodes, filters, or other operations for each input channel, such that a total number of outputs of the channel-wise layer 230 can be an integer multiple of *m* (e.g., same or different integer multiple for different channel-wise layers 230, etc.). In some instances, a channel-wise layer 230 can be or include a channel-wise convolutional layer (e.g., conv1d layer, etc.). Other channel-wise layer types are possible (e.g., channel-wise self-attention layer, etc.). In some instances, a channel-wise convolutional layer can include one or more filters, such as a filter for each of *m* input channels. In other instances, one or more filters can have weights that are shared between channels, provided that each operation performed using the filter is a channel-wise operation (e.g., using inputs from only one channel). In some instances, a number *d* of output values associated with each node or channel of a channel-wise layer 230 can be smaller than a number of input values (e.g., *t*) associated with the channel. In some instances, a node or filter of a channel-wise layer 230 can include one or more weight data structures, such as a vector, matrix, or tensor comprising a plurality of weights. In some instances, a node or filter of a channel-wise layer 230 can include one or more activation functions, such as a non-linear activation function (e.g., sigmoid function, rectified linear unit (ReLU) function, Gaussian error linear unit, softmax, etc.). In some instances, an activation function (e.g., ReLU, etc.) can have an output value of zero for a plurality (e.g., infinite plurality) of possible input values and a non-zero output value for a plurality (e.g., infinite plurality) of possible inputs. In some instances, processing a multi-channel input 220 with a channel-wise layer 230 can include, for each respective node associated with a respective channel, multiplying (e.g., matrix multiplying, etc.) a plurality of inputs associated with the channel by a weight data structure, and passing the resulting values through one or more activation functions. In instances where a channel-wise layer 230 comprises a convolutional layer, processing a multi-channel input 220 can include, for each of one or more respective filters associated with a respective channel, convolving the filter over a plurality of subsets of the inputs associated with the channel. Convolving a filter over a plurality of subsets can include, for each subset: multiplying (e.g., matrix multiplying, etc.) the inputs associated with the subset by a weight data structure associated with the filter, and processing the resulting values through one or more activation functions. Matrix multiplication can include, for example, performing a plurality of element-wise multiplications to generate a plurality of element-wise products; and summing element-wise products to generate one or more matrix entries associated with a matrix product.

The channel-wise layer outputs 232 can include, for example, intermediate values generated or used by the second machine-learned model 122 in generating a final prediction. Channel-wise layer outputs 232 can include, for example, a plurality of respective intermediate values, wherein each intermediate value is associated with exactly one input channel and is generated based on inputs from the exactly one input channel. In some instances, the channel-wise layer outputs 232 can include numerical values (e.g., floating-point values, integer values, quantized values), binary values, or other suitable data types. In some instances, the channel-wise layer outputs 232 can be, include, or be referred to as machine-learned embeddings or channel-wise embeddings. In some instances, the channel-wise layer outputs 232 can be stored in or otherwise correspond to a vector, matrix, or tensor format.

An inter-channel layer 234 can include, for example, one or more nodes, filters, or other operations configured to receive input values associated with two or more channels (e.g., all channels, etc.) and generate outputs based on the inputs associated with the two or more channels. In some instances, an inter-channel layer 234 can be or include an inter-channel convolutional layer (e.g., conv1d layer, etc.). Other inter-channel layer 234 types are possible (e.g., attention layer, fully connected layer, etc.). In some instances, an inter-channel convolutional layer can include one or more filters, which can be convolved over a plurality of subsets of the channel-wise layer inputs 232. One or more subsets (e.g., all subsets) over which such a filter is convolved can include inputs from two or more distinct channels. In one example embodiment, multi-channel inputs 220 can have *m* channels comprising one or more measurements for each of *t* timestamps; a channel-wise layer 230 can apply a *t* x 1 1D convolution to generate *d* dimension embeddings for each of the *m* input channels; and an inter-channel layer 234 can include a conv1D network with a filter size of *t* x *md.* In some instances, a node or filter of an inter-channel layer 234 can include one or more weight data structures, such as a vector, matrix, or tensor comprising a plurality of weights. In some instances, a node or filter of an inter-channel layer 234 can include one or more activation functions, such as a non-linear activation function. In some instances, an activation function (e.g., ReLU, etc.) can have an output value of zero for a plurality (e.g., infinite plurality) of possible input values and a non-zero output value for a plurality (e.g., infinite plurality) of possible inputs. In some instances, processing channel-wise layer outputs 232 with an inter-channel layer 234 can include, for each respective node of an inter-channel layer 234, multiplying (e.g., matrix multiplying, etc.) the inputs associated with the node by a weight data structure, and passing the resulting values through one or more activation functions. In some instances (e.g., where an inter-channel layer 234 comprises a convolutional layer), processing a multi-channel input 220 can include, for each of one or more filters of the inter-channel layer 234, convolving the filter over a plurality of subsets of the channel-wise layer outputs 232. Convolving a filter over a plurality of subsets can include, for each subset: multiplying (e.g., matrix multiplying, etc.) the inputs associated with the subset by a weight data structure associated with the filter, and processing the resulting values through one or more activation functions.

The inter-channel layer outputs 236 can include, for example, intermediate values generated by the inter-channel layers 234 based on the channel-wise outputs 232. In some instances, the inter-channel layer outputs 236 can include numerical values (e.g., floating-point values, integer values, quantized values), binary values, or other suitable data types. In some instances, the inter-channel layer outputs 236 can be, include, or be referred to as machine-learned embeddings or inter-channel embeddings. In some instances, the inter-channel layer outputs 236 can be stored in or otherwise correspond to a vector, matrix, or tensor format.

A fully connected layer 238 can include, for example, a machine-learning model layer (e.g., neural network layer, etc.) comprising one or more nodes, wherein each node of the fully connected layer is connected to each input to the fully connected layer (e.g., each inter-channel layer output 236, etc.). For example, a node of a fully connected layer 238 can comprise a plurality of weights, wherein a number of weights of the node can be equal to a number of inter-channel layer outputs 236 received by the fully connected layer 238. In some instances, a node of a fully connected layer 238 can include one or more weight data structures, such as a vector, matrix, or tensor comprising a plurality of weights. In some instances, a node of a fully connected layer 238 can include one or more activation functions, such as a non-linear activation function. In some instances, processing inter-channel layer outputs 236 with a fully connected layer 238 can include, for each respective node of the fully connected layer 238, multiplying (e.g., matrix multiplying, etc.) the inter-channel layer outputs 236 by a weight data structure, and passing the resulting values through one or more activation functions.

A predicted first-model residual 240 can be, for example, a final output of the second machine-learned model 122, which can in some instances correspond to an expected prediction residual of a first machine-learned model 108.

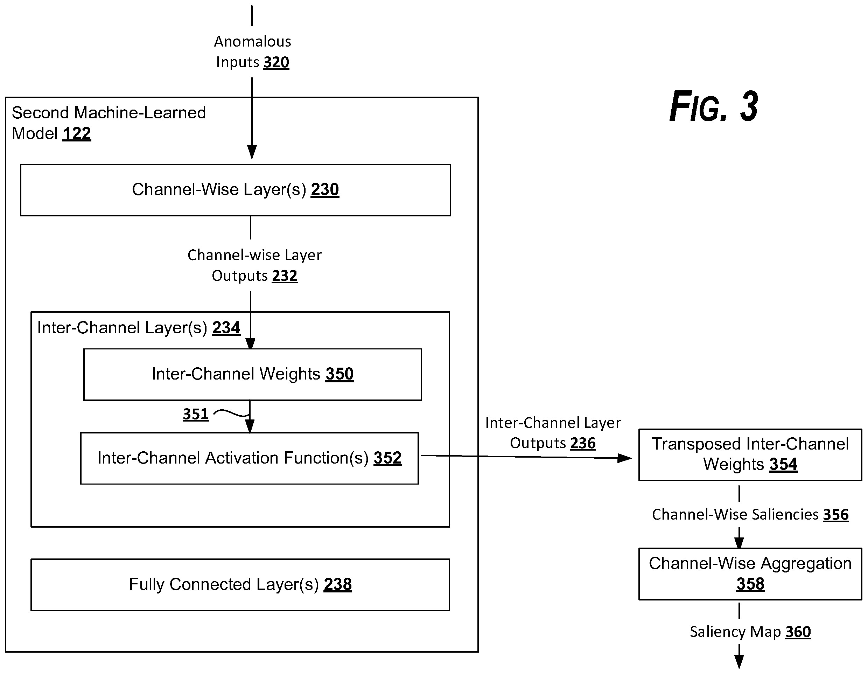

FIG. 3 is a block diagram showing an example system for generating a saliency map 360 associated with the second machine-learned model 122. The second machine-learned model 122 can have an architecture as depicted in FIG. 2, and one or more inter-channel layers 234 of the second machine-learned model can include a plurality of inter-channel weights 350 and one or more inter-channel activation functions 352. An input (e.g., anomalous input 320) can be processed with one or more channel-wise layer(s) 230 and inter-channel layer(s) 234 of the second machine-learned model 122 to generate inter-channel layer outputs 236. The inter-channel layer outputs 236 can be processed with transposed inter-channel weights 354, which can reverse a process associated with the inter-channel weights 350, to generate channel-wise saliencies 356. The channel-wise saliencies 356 can be aggregated according to a channel-wise aggregation 358 to generate a saliency map 360.

An anomalous input 320 can be, include, or otherwise share one or more properties with a multi-channel input 220 or input 120. For example, an anomalous input 320 can have any property described above with respect to an input 120 or multi-channel input 220. In some instances, an anomalous input 320 can be an input 120, 220 associated with a condition of interest, such as a condition for which a root cause is desired to be found. For example, in some instances, an anomalous input 320 can be associated with an industrial fault, machine-learned prediction error of a first machine-learned model 108, unexpected occurrence, or other event of interest for root cause analysis.

Inter-channel weights 350 can be or include, for example, weights of an inter-channel layer (e.g., weight matrix, etc.). For example, inter-channel weights 350 can include weights as described above with respect to the inter-channel layer 234 of FIG. 2.

Inter-channel activation function(s) 352 can be or include, for example, activation function(s) of an inter-channel layer (e.g., ReLU, etc.). For example, inter-channel activation function(s) 352 can include activation functions as described above with respect to the inter-channel layer 234 of FIG. 2.

Transposed inter-channel weights 354 can include, for example, a matrix transpose or other transformation of the inter-channel weights 350. In some instances, transposed inter-channel weights 354 can be configured to reverse a process associated with the inter-channel weights 350. For example, if an inter-channel layer 234 is configured to perform a matrix multiplication between the channel-wise layer outputs 232 and the inter-channel weights 350, the transposed inter-channel weights 354 can be configured to reverse the matrix multiplication. For example, generating channel-wise saliencies 356 can include performing a first matrix multiplication on the channel-wise layer outputs 232 using inter-channel weights 350 to generate inter-channel weighted values 351; processing the inter-channel weighted values 351 with inter-channel activation function(s) 352 to generate inter-channel layer outputs 236; and performing a second matrix multiplication on the inter-channel layer outputs 236 using the transposed inter-channel weights 354, wherein the second matrix multiplication is an inverse of the first matrix multiplication.

The channel-wise saliencies 356 can include, for example, a plurality of numerical values (e.g., floating-point values, integer or quantized values, etc.) or groups (e.g. vectors, matrices, etc.) of numerical values. In some instances, the channel-wise saliencies 356 can be indicative of a contribution of one or more channel-wise layer outputs 232 to a magnitude of one or more inter-channel layer outputs 236 or predicted first-model residuals 240. In some instances, channel-wise saliencies 356 can include one or more numerical saliency values for each of *m* input channels. In some instances, each input channel can be associated with a plurality of channel-wise saliencies 356. In some instances, channel-wise saliencies 356 can have one or more dimensions that are the same as a corresponding dimension of the channel-wise layer outputs 232. For example, if a channel-wise layer 230 outputs *d* dimension embeddings for each of *m* input channels, a corresponding set of channel-wise saliencies 356 can include *d* values for each of *m* input channels. In some instances, the process for generating a saliency map 360 can be repeated for a plurality of multi-channel inputs 220 or anomalous inputs 320, such as a plurality of *(n - t +* 1) inputs 220, 320 associated with a sliding time window of width *t* associated with a time series of *n* timestamps, wherein *n* ≥ *t.* In such instances, the channel-wise saliencies 356 for each of *(n - t +* 1) time window positions can include, for example, *d* values for each of *m* input channels.

Channel-wise aggregation 358 can include, for example, any appropriate process for aggregating a plurality of channel-wise saliencies associated with a particular channel to generate a single saliency value for the channel. In some instances, channel-wise aggregation 358 can include determining, for each channel of a plurality of input channels, one or more statistical aggregate values (e.g., means, medians, average absolute value, mean square, ℓ₂-norms, etc.) of a plurality of channel-wise saliencies 356 associated with the channel. In some instances, channel-wise aggregation can include one or more additional actions, such as ranking or otherwise transforming one or more channel-wise saliencies 356 or aggregate values.

A saliency map 360 can include, for example, a plurality of respective values indicative of a respective saliency of each of a plurality of respective channels. For example, a saliency map 360 can include, for each channel, a floating-point value (e.g., average channel-wise saliency 356, etc.), integer value (e.g., saliency rank associated with a channel, etc.) or other value indicative of a respective saliency of the channel (e.g., at a particular time step or time window). In some instances, one or more highest-ranked or most salient input channels can be identified as a root cause of a condition or event of interest. In some instances, a saliency map 360 can be combined with other saliency maps 360 associated with other time steps (e.g., associated with a sliding time window) to map a saliency of each of a plurality of input channels over time. In some instances, an overall root cause can be determined based on a plurality of saliency maps 360 associated with a plurality of time steps (e.g., of a sliding time window). For example, in some instances, *d* x *m* channel-wise saliencies 356 for each window position of a sliding time window can be aggregated by computing an average absolute contribution across *d* for each input channel to generate an m-channel saliency map 360 for each window position of a sliding time window. Subsequently, an overall rank across an entire time series can be determined for each input channel by computing an ℓ₂-norm for each input channel across all window positions of the sliding time window. In some instances, an input channel having a high (e.g., highest) ℓ₂-norm can be identified as a channel with a high (e.g., highest) likelihood of being the root cause of an anomaly.

In some instances, one or more actions (e.g., maintenance actions such as repair or inspection actions) can be recommended or performed based on the saliency map 360. For example, recommending or performing an action based on the saliency map 360 can include determining, based on the saliency map, a root cause; and recommending or performing an action based on the determination. Recommending an action can include, for example, accessing a data structure (e.g., database, table, file, etc.) correlating a plurality of root causes to a plurality of maintenance actions; retrieving, from the data structure, data associated with the root cause that was determined based on the saliency map; determining, based on the retrieved data, a recommended action; and outputting the recommended action. Outputting a recommended action can include, for example, assigning the action to an actor (e.g., assigning to a device via an application programming interface, electrical signal, network signal, etc.; assigning to a human via a workflow system; etc.), sending an action request, or otherwise outputting the recommended action (e.g., to a human user). Performing an action can include, for example, causing the action to be performed (e.g., by a computing device, sensor device, actuator, etc.). As an illustrative example, an action can include fully or partially opening or closing a valve to adjust a flow rate, pressure, or other measured physical property of an industrial process (e.g., gas turbine process). Performing such an action can include, for example, sending a signal (e.g., electrical signal, network signal, etc.) to a valve actuator or other control device to cause the control device to open or close the valve. As another example, an action can include performing an inspection, and performing the action can include sending a signal to a device (e.g., robotic device, etc.) comprising one or more sensors to cause the device to perform the inspection. In some instances, recommending an action can include prompting a machine-learned model (e.g., language model; multi-modal model for processing language data, sensor data, audio or visual data, and/or other data types; retrieval-augmented generation model; etc.) with data (e.g., text, sensor data, etc.) indicative of the determined root cause, and determining a recommended action using the machine-learned model. In some instances, a recommended action can include one or more internal actions (e.g., processor action, read/write action to memory or storage, etc.) to be performed by a computing system or computing device that performed the root cause analysis.

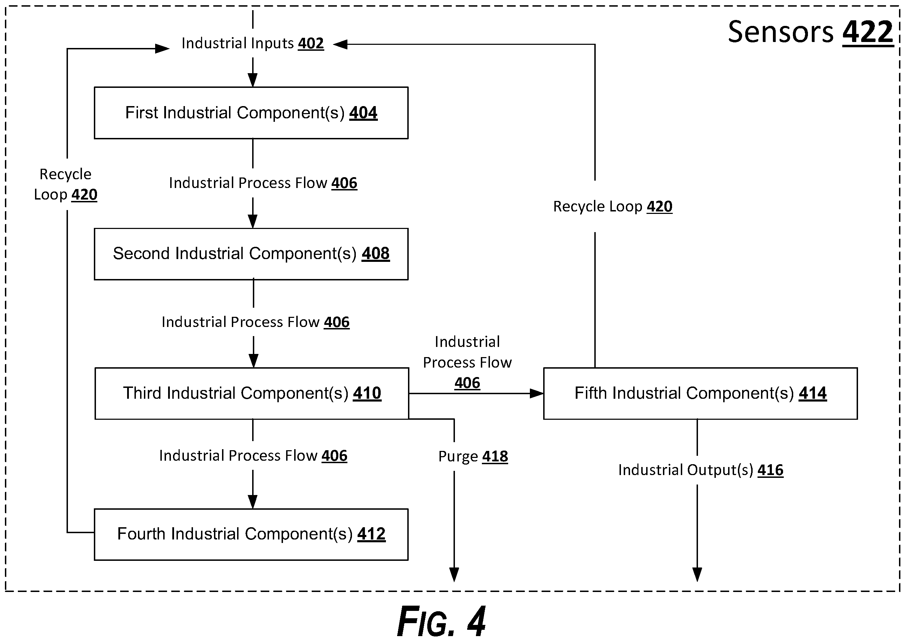

FIG. 4 is a block diagram of an example industrial application of root cause analysis in accordance with embodiments of the present disclosure. In an example industrial process, industrial inputs 402 can be processed in an industrial process flow 406 by one or more industrial components 404, 408, 410, 412, 414 to generate one or more industrial outputs 416. Sensors 422 can measure one or more aspects of the industrial process to generate measurement data. In some embodiments, the measurement data can include a plurality of measurement channels (e.g., plurality of sensors, sensor types, etc.) generating time series data (e.g., each sensor 422 taking a measurement every few minutes, etc.). The measurement data can be used as input (e.g., multi-channel inputs 220, anomalous inputs 320, etc.) to a second machine-learned model 122. In some instances, a saliency map 360 can be generated and used to determine a root cause (e.g., root cause of an industrial operating fault, etc.). In some example experiments according to the present disclosure, example root cause analysis methods were tested using an example chemical manufacturing process called the Tennessee Eastman Process.

Industrial inputs 402 can include any input that can be provided to an industrial process, including but not limited to materials (e.g., raw materials, natural resources, manufactured materials, fuel, etc.), energy (e.g., electricity, heat, light, etc.), labor, or other inputs. In some example experiments according to the present disclosure, an example industrial process used for root cause analysis was the Tennessee Eastman process, wherein the industrial inputs 402 included, among other things, input chemicals for a chemical reaction.

Industrial components 404, 408, 410, 412, and 414 can include, for example, process steps to be performed on the industrial inputs 402; or machines, tools, devices, persons, or other instrumentalities for performing process steps on the industrial inputs 402. In some example experiments according to the present disclosure, an example industrial process used for root cause analysis was the Tennessee Eastman process, wherein a first industrial component 404 was a reactor for performing a chemical reaction, a second industrial component 408 was a condenser, a third industrial component 410 was a separator, a fourth industrial component 412 was a compressor, and a fifth industrial component 414 was a stripper.

Although Figure 4 depicts a particular number of industrial components connected in a particular order for purposes of illustration and discussion, the methods of the present disclosure are not limited to the particularly illustrated order or arrangement. In principle, methods of the present disclosure can be applied to any process (e.g., industrial process) for determining a root cause associated with the process (e.g., root cause of an industrial fault, etc.). For example, the various industrial components 404, 408, 410, 412, 414 can be omitted, rearranged, combined, and/or adapted in various ways without deviating from the scope of the present disclosure.

Industrial process flow 406 can be, for example, a processing path followed by one or more industrial inputs 402. In some instances, a physical embodiment of an industrial process flow 406 can include a line (e.g., pipe, etc.) for transporting an industrial input 402; a vehicle, conveyor belt, or other transportation device; an in-place transition, wherein two or more process steps may be performed on an industrial input 402 without physically moving the industrial input 402 between process steps; etc. In some example experiments according to the present disclosure, an example industrial process used for root cause analysis was the Tennessee Eastman process, wherein at least some industrial process flow 406 components can include lines for transporting fluids.

Industrial outputs 416 can include, for example, any intended output or effect of an industrial process (e.g., manufactured goods; energy such as electricity or heat; changes to an environment such as cooling; or other output or effect). In some example experiments according to the present disclosure, an example industrial process used for root cause analysis was the Tennessee Eastman process, wherein an industrial output 416 can include a manufactured chemical.

A purge 418 can include, for example, an industrial process flow 406 for disposing of one or more items (e.g., byproducts), dissipating waste energy (e.g. heat, pressure), or other purging. A recycle feed 420 can include, for example, a line or other flow path for feeding partially processed input materials back to an earlier processing stage.

Sensors 422 can include, for example, any device or process for generating, recording, or storing data associated with the industrial process of FIG. 4. For example, although the word "sensors" is used for the purpose of illustration and discussion, any system or method for generating input data can be used in principle. For example, in some instances, sensor 422 data can include data associated with one or more input or control mechanisms (e.g., operator inputs for adjusting an industrial input 402, etc.). In some instances, sensors 422 can include one or more computing devices for measuring, storing, or computing data. As depicted, sensors 422 can be generally located throughout an entire region (e.g., building, container, machine, room, area, etc.) in which the industrial process of FIG. 4 may be occurring, or sensors 422 may be configured to monitor areas or activities throughout the region. In some example experiments according to the present disclosure, an example industrial process used for root cause analysis was the Tennessee Eastman process, and sensor 422 data included flow rate and feed rate data from various rate sensors; temperature and pressure data; chemical composition data; valve data associated with a plurality of respective control valves; and other relevant industrial data.

In some instances, multi-channel inputs 220 can include a channel for each sensor 422 of a plurality of sensors 422. For example, in example experiments associated with the Tennessee Eastman Process, inputs 106, 116, 120, 220, 320 comprised 51 input channels generated by 51 sensors 422. In other instances, a single channel may contain data from a plurality of sensors 422. In some example experiments according to the present disclosure, an example multi-channel input 220 included a sliding time window of *t* timestamps, and each channel included *t* datapoints from a single sensor 422. In some instances, a sliding time window having a width of *t* timestamps can be used to divide a time series of *n* timestamps into a plurality of *(n - t +* 1) sets of multi-channel inputs 220, with each set of multi-channel inputs 220 being associated with a t-consecutive-timestamp subset of the *n* timestamps.

In some instances, systems and methods disclosed herein can be applied to one or more industrial processes associated with turbomachines or gas turbines. Turbomachines are utilized in a variety of industries and applications for energy transfer purposes. For example, a gas turbine engine generally includes a compressor section, a combustion section, a turbine section, and an exhaust section. The compressor section progressively increases the pressure of a working fluid entering the gas turbine engine and supplies this compressed working fluid to the combustion section. The compressed working fluid and a fuel (e.g., natural gas) mix within the combustion section and burn in a combustion chamber to generate high pressure and high temperature combustion gases. The combustion gases flow from the combustion section into the turbine section where they expand to produce work. For example, expansion of the combustion gases in the turbine section may rotate a rotor shaft connected, e.g., to a generator to produce electricity. The combustion gases then exit the gas turbine via the exhaust section.

In some example embodiments, example industrial components 404, 408, 410, 412, 414 can include gas turbines, sections or components of gas turbines (e.g., compression section, combustion section, turbine section, exhaust section, etc.), subcomponents of gas turbines (e.g., component of a turbine section such as rotor blade, shaft, etc.), or industrial devices for use in combination with gas turbines (e.g., electrical transmission and generation components) or components thereof, etc.

### Example Input Data

FIG. 5 is an illustration of example time series data 506 in accordance with embodiments of the present disclosure. Each of a plurality of measurement channels can include a plurality of measurement values at a plurality of timestamps. Each measurement channel can be plotted on a chart having a time axis 502 and measurement value axis 504 showing measurement values of that channel for each timestamp depicted. In some instances, a sliding time window 508 can define an input (e.g., multi-channel input 220, anomalous input 320, etc.) to be provided to a second machine-learned model 122.

A time axis 502 can be, for example, an axis for depicting a time dimension. In some instances, a resolution of the time axis 502 can be discrete or continuous. For example, in some instances, a time axis 502 can include a plurality of timestamps associated with discrete intervals. For example, in some example experiments according to the present disclosure, sensors 422 collected industrial data every 3 minutes for 25 hours, resulting in 500 time steps at discrete 3-minute intervals.

A measurement value axis 504 can be, for example, an axis for depicting a measurement value dimension associated with a particular measurement channel. A measurement value or measurement channel can include any relevant value, such as values measured by one or more sensors 422 (e.g., temperature, pressure, flow rate, chemical composition, volume or fluid level, etc.); values collected by a data logger; values input to one or more control devices (e.g., valves, computing devices, etc.); or any other relevant value.

Time series data 506 can be, for example, a series of data points (e.g., measurements performed at a particular time, etc.) that can be plotted on a time axis 502 and measurement value 504.

A sliding time window 508 can be, for example, a window of *t* consecutive timestamps defining an interval on the time axis 502. The sliding time window 508 can define, for example, a plurality of subsets of the time series data 506, and each subset can be used as a multi-channel input 220, anomalous input 320, or input 106, 116, 120. In some instances, a sliding time window 508 can have a constant or fixed width comprising a fixed number *t* of time steps (e.g., for use with a temporal convolutional network having a fixed input width, etc.). However, this is not required, and machine-learned model architectures configured to process variable width time windows 508 can be used without deviating from the scope of the present disclosure.

### Example Results

In some example experiments according to the present disclosure, example embodiments were tested using a Tennessee Eastman Process dataset comprising realistic simulation data of both fault-free and faulty operation of a chemical plant process. In the experiments, example embodiments according to the present disclosure were compared to alternative root cause analysis architectures, including 1D and 2D convolutional neural networks; deep autoencoders; transformer-based multi-variable multi-step prediction; and long short-term memory. In the example experiments, provided systems and methods outperformed the tested alternative methods according to multiple performance metrics. For example, in experiments where each tested system ranked a plurality of input channels from 1 (most likely to be a root cause) to 51 (least likely to be a root cause), provided systems and methods gave the true root causes an average rank of 1.99, compared to 8.59 for the best-performing alternate implementation tested and 15.98 for the worse-performing alternate implementation tested. In another example experiment, provided systems and methods achieved an area under a precision-recall curve of 0.9315 in an anomaly detection task, compared to 0.9305 for the best-performing alternative implementation tested and 0.9240 for the worst-performing alternative implementation tested.

### Example Methods

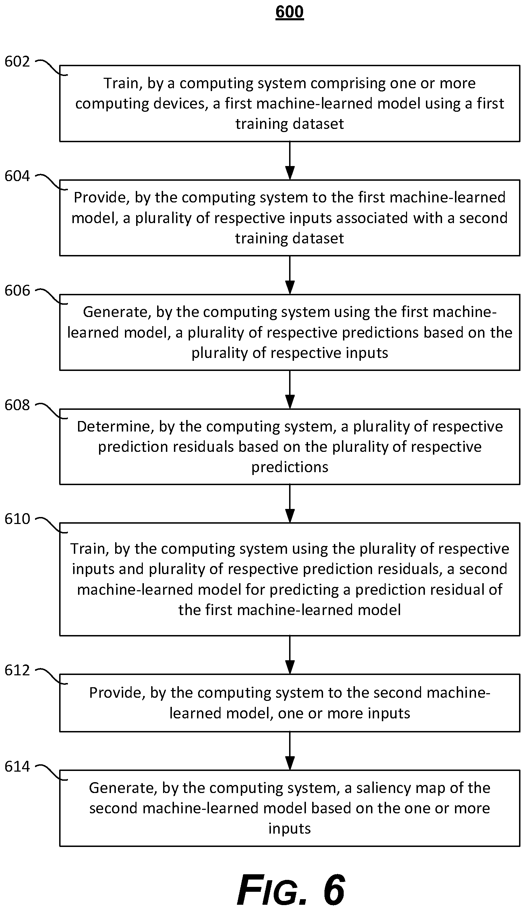

Figure 6 depicts a flowchart diagram of an example method for root cause analysis according to example embodiments of the present disclosure. Although Figure 6 depicts steps performed in a particular order for purposes of illustration and discussion, the methods of the present disclosure are not limited to the particularly illustrated order or arrangement. The various steps of example method 600 can be omitted, rearranged, combined, and/or adapted in various ways without deviating from the scope of the present disclosure.

At 602, example method 600 can include training, by a computing system comprising one or more computing devices, a first machine-learned model using a first training dataset. In some instances, a first machine-learned model can be, comprise, or be comprised by a first machine-learned model 108. In some instances, a first training dataset can be, comprise, or be comprised by normal training data 102. In some instances, example method 600 at 602 can include using one or more systems or performing one or more activities described with respect to FIG. 1A.

At 604, example method 600 can include providing, by the computing system to the first machine-learned model, a plurality of respective inputs associated with a second training dataset. In some instances, a second training dataset can be, comprise, or be comprised by mixed training data 114. In some instances, example method 600 at 604 can include using one or more systems or performing one or more activities described with respect to FIG. 1B.

At 606, example method 600 can include generating, by the computing system using the first machine-learned model, a plurality of respective predictions based on the plurality of respective inputs. In some instances, a respective prediction can be, comprise, or be comprised by an output 118. In some instances, example method 600 at 606 can include using one or more systems or performing one or more activities described with respect to FIG. 1B.

At 608, example method 600 can include determining, by the computing system, a plurality of respective prediction residuals based on the plurality of respective predictions. In some instances, example method 600 at 608 can include using one or more systems or performing one or more activities described with respect to FIG. 1B.

At 610, example method 600 can include training, by the computing system using the plurality of respective inputs and plurality of respective prediction residuals, a second machine-learned model for predicting a prediction residual of the first machine-learned model. In some instances, a second machine-learned model can be, comprise, or be comprised by a second machine-learned model 122. In some instances, training the second machine-learned model can include performing one or more model updates 126. In some instances, example method 600 at 610 can include using one or more systems or performing one or more activities described with respect to FIG. 1B.

At 612, example method 600 can include providing, by the computing system to the second machine-learned model, one or more inputs. In some instances, an input can be, comprise, or be comprised by a multi-channel input 220 or anomalous input 320. In some instances, example method 600 at 612 can include using one or more systems or performing one or more activities described with respect to FIG. 3.

At 614, example method 600 can include generating, by the computing system, a saliency map of the second machine-learned model based on the one or more inputs. In some instances, a saliency map can be, comprise, or be comprised by a saliency map 360. In some instances, example method 600 at 614 can include using one or more systems or performing one or more activities described with respect to FIG. 3.

### Example Computing Systems and Devices

FIG. 7 is a block diagram of an example computing system. Computing system 702 can include one or more computing devices 704, which can each include processor devices 706, memory devices 712, storage devices 714, or input/output devices 716. A computing device 704 can include one or more machine-learned models 718 (e.g., first machine-learned model 108, second machine-learned model 122) or portions thereof, which can be located, for example, in a storage device 714 or memory device 712. The computing system 702 can be connected via a network 720 to one or more other systems, such as one or more industrial systems 722 (e.g., as described with respect to FIG. 4), computing systems 724 (e.g., client computing systems, third-party computing systems, computing systems for controlling or monitoring an industrial process, etc.), or systems associated with one or more events of interest 726 for which root cause analysis is desired.

Computing system 702 can include any number of computing devices 704, such as one computing device 704 or many computing devices 704. For example, a computing system 702 for a small training task, or a computing system for performing inference with a machine-learned model, may use one or a few computing devices 704. As another example, a computing system 702 for a large training task (e.g., training a machine-learned model having a large number of parameters or based on a large training dataset) may include many computing devices 704 performing parallel computing. Parallel computing can include breaking down a computational task into a plurality of subtasks (e.g. training iterations, machine-learned model subcomponents, etc.), and assigning one or more respective subtasks to each of a plurality of computing devices 704. Parallel computing can further include communicating the results of a plurality of subtasks between the computing devices 704 or otherwise aggregating the subtask results to generate a final result of the computational task.

A computing device 704 can include any type of computing device, such as a server, workstation, desktop, laptop, virtual machine, mobile device, or other computing device.

Processors 706 can include, for example, one or more central processing units (CPUs) 708 and one or more application-specific integrated circuits (ASICs) 710, such as ASICs for performing floating-point operations (e.g., GPUs, etc.), ASICs for performing matrix multiplication, ASICs for performing machine-learning or artificial intelligence tasks, or other ASICs. The CPUs 708 can comprise, for example, any hardware configured to operate as a CPU (e.g. a microprocessor, microcontroller, soft-core processor, etc.).

Memory devices 712 can include, for example, one or more non-transitory computer-readable storage media for temporary storage of data (e.g., to facilitate faster data access relative to storage devices 714). Temporary storage media can include, for example, one or more memory devices such as high-bandwidth memory, random access memory (e.g., RAM, DRAM, SDRAM, DDR SRAM, etc.), virtual memory, cache memory, etc. Memory devices 712 can include, for example, volatile memory, non-volatile memory, and semi-volatile memory.

Storage devices 714 can include, for example, one or more non-transitory computer-readable storage media for persistent storage of data (e.g., including when a computing device 704 is powered down). Persistent storage devices can include non-volatile storage devices such as read-only memory (e.g., ROM, PROM, EPROM, EEPROM, etc.), flash memory (e.g., NAND flash memory, etc.), magnetic storage devices (e.g., hard disk drives, floppy disks, etc.), optical storage devices (e.g., CD, DVD, Blu-Ray, etc.), or other non-volatile memory. In some instances, storage devices 714 can include volatile or semi-volatile memory coupled with a continuous power source (e.g., electrical grid power source, backup battery, etc.) provided to the volatile memory to preserve data when a computing device 704 is shut down.

Input/output devices 716 can include, for example, any device or component for receiving input from or providing output to a device, system, person, or other entity other than the computing device 704. Input/output devices 716 can include, for example, network connections; network cards or network adapters for communicating over a network connection; human input/output devices such as keyboards, mouses, display monitors, speakers, cameras, microphones, etc.; or other input/output devices. In some instances, input/output devices 716 can include one or more sensors, such as sensors 422 or other sensors associated with an industrial system 722 or event of interest 726. In some instances, input/output devices 716 can include one or more devices for communicating with such sensors.

Machine-learned models 718 can include, for example, data storing one or more parameters of a machine-learned model; computer-readable instructions (e.g., source code, object code, etc.) that, when executed by one or more processors 706, will cause the processors to perform one or more operations of the machine-learned model; or any other data or components associated with a machine-learned model (e.g., first machine-learned model 108, second machine-learned model 122, etc.).

The network 720, can be or comprise, for example, the Internet or any other network (e.g., local area network, wide area network, peer-to-peer network, etc.) configured to transfer computer-readable data between computing devices. The network 720 can include, for example, wired connections, wireless connections, or a combination of both wired and wireless connections. In some instances, the network 720 can be associated with one or more communication protocols for communicating over the network 720, such as transmission control protocol (TCP), internet protocol (IP), hypertext transfer protocol (HTTP), user datagram protocol (UDP), border gateway protocol (BGP), address resolution protocol (ARP). In some instances, the network 720 can be associated with one or more security protocols for secure communication over the network 720, such as a secure socket layer (SSL) or transport layer security (TLS) protocol.

Industrial systems 722 can include, for example, systems associated with an industrial process for which fault monitoring or root cause analysis may be desired. For example, industrial systems 722 can include one or more systems as described above with respect to FIG. 4. Industrial systems 722 can include, for example, a plurality of sensors 422 for collecting data (e.g., time series data) associated with an industrial process. Such data can be provided, for example, to one or more machine-learned models 718 to perform root cause analysis associated with the industrial system 722 (e.g., in response to an industrial fault).

Computing systems 724 can include any type of computing device, such as a workstation, server, laptop, desktop, mobile device, virtual device, or other computing system. Computing systems 724 can include, for example, client computing systems, server computing systems, or third-party computing systems. In some instances, a computing system 724 can include any component or have any property described above with respect to computing device 704. In some instances, a computing system 724 can include one computing device or a plurality of computing devices.

Event(s) of interest 726 can include, for example, any event for which root cause analysis may be desired. For example, an event of interest can include a machine-learned prediction error; an anomalous or unexpected event, such as an event associated with an anomalous measurement, outlier measurement, or measurement associated with a high machine-learned prediction residual; a faulty or harmful event, such as an industrial fault, engineering or construction failure (e.g., bridge collapse, etc.), power failure, natural disaster, human-caused disaster, etc.; or any other event for which root cause analysis may be desired.

FIG. 7 illustrates one example arrangement of computing systems that can be used to implement the present disclosure. Other computing system configurations can be used as well. For example, individual components depicted can be omitted, rearranged, or added without deviating from the scope of the present disclosure.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

Further aspects of the invention are provided by the subject matter of the following clauses:

A method of root cause analysis, comprising: providing, by a computing system comprising one or more computing devices, a plurality of input values to a second machine-learned model; and generating, by the computing system using the second machine-learned model based on the plurality of input values, a saliency map; wherein the second machine-learned model was trained to predict a prediction residual associated with a first machine-learned model.

The method of one or more of these clauses, wherein the plurality of input values comprises time series data.

The method of one or more of these clauses, wherein the plurality of input values comprises measurements associated with a plurality of measurement channels.

The method of one or more of these clauses, wherein the second machine-learned model comprises at least one channel-wise layer.

The method of one or more of these clauses, wherein the channel-wise layer is a convolutional layer.

The method of one or more of these clauses, wherein the saliency map comprises a plurality of channel-wise saliencies indicative of a contribution of a respective measurement channel to a prediction of the second machine-learned model.

The method of one or more of these clauses, wherein the plurality of measurement channels comprise measurement channels associated with an industrial process.

The method of one or more of these clauses, wherein the first machine-learned model was trained to predict an outcome of the industrial process during normal operating behavior.

The method of one or more of these clauses, wherein the second machine-learned model was trained using a training dataset comprising prediction residuals of the first machine-learned models, wherein the prediction residuals were determined based on data associated with both normal and anomalous operating behavior of the industrial process.

The method of one or more of these clauses, wherein the plurality of input values comprises one or more values associated with anomalous behavior of the industrial process.

The method of one or more of these clauses, further comprising identifying, based on the saliency map, one or more root causes associated with anomalous operating behavior of the industrial process.

The method of one or more of these clauses, further comprising determining, by the computing system based at least in part on the saliency map, a recommended maintenance action associated with the one or more root causes.

The method of one or more of these clauses, wherein the maintenance action comprises a repair or replacement.

The method of one or more of these clauses, wherein the maintenance action comprises an inspection.

The method of one or more of these clauses, wherein generating a saliency map comprises: processing, by the computing system using at least one layer of the second machine-learned model, the input values to generate a machine-learned embedding, wherein the at least one layer comprises one or more weights and one or more activation functions; processing, by the computing system based at least in part on the one or more weights, the embedding to generate a saliency map.

The method of one or more of these clauses, wherein the one or more weights comprise a weight matrix, and processing based at least in part based on one or more weights comprises processing the embedding based on a transpose of the weight matrix.

The method of one or more of these clauses, wherein generating a saliency map further comprises aggregating, by the computing system, a plurality of processed values, wherein the processed values were determined by processing the embedding.

The method of one or more of these clauses, further comprising identifying, by the computing system based on the saliency map, a cause associated with a high absolute value of an output of the second machine-learned model, wherein the output corresponds to an expected prediction residual associated with the first machine-learned model.

A computing system comprising: one or more processors; and one or more non-transitory computer-readable media that collectively store instructions that, when executed by the one or more processors, cause the computer system to perform operations, the operations comprising: performing the method of one or more of these clauses.

One or more non-transitory computer-readable media storing instructions that, when executed by one or more processors, cause the one or more processors to perform operations, the operations comprising: performing the method of one or more of these clauses.

## Claims

1. A method of root cause analysis, comprising:
providing, by a computing system comprising one or more computing devices, a plurality of input values to a first machine-learned model; and
generating, by the computing system using the first machine-learned model based on the plurality of input values, a saliency map;
wherein the first machine-learned model was trained to predict a prediction residual associated with a second machine-learned model.

2. The method as in claim 1, wherein the plurality of input values comprises time series data.

3. The method as in claim 1, wherein the plurality of input values comprises measurements associated with a plurality of measurement channels.

4. The method as in claim 3, wherein the first machine-learned model comprises at least one channel-wise layer.

5. The method as in claim 4, wherein the channel-wise layer is a convolutional layer.

6. The method as in claim 3, wherein the saliency map comprises a plurality of channel-wise saliencies indicative of a contribution of a respective measurement channel to a prediction of the first machine-learned model.

7. The method as in claim 3, wherein the plurality of measurement channels comprise measurement channels associated with an industrial process.

8. The method as in claim 7, wherein the second machine-learned model was trained to predict an outcome of the industrial process during normal operating behavior.

9. The method as in claim 7, wherein the first machine-learned model was trained using a training dataset comprising prediction residuals of the second machine-learned model, wherein the prediction residuals were determined based on data associated with both normal and anomalous operating behavior of the industrial process.

10. The method as in claim 7, wherein the plurality of input values comprises one or more values associated with anomalous behavior of the industrial process.

11. The method as in claim 7, further comprising identifying, based on the saliency map, one or more root causes associated with anomalous operating behavior of the industrial process.

12. The method as in claim 11, further comprising determining, by the computing system based at least in part on the saliency map, a recommended maintenance action associated with the one or more root causes.

13. The method as in claim 12, wherein the recommended maintenance action comprises a repair or replacement.

14. The method as in claim 12, wherein the recommended maintenance action comprises an inspection.

15. The method as in claim 1, wherein generating a saliency map comprises:
processing, by the computing system using at least one layer of the first machine-learned model, the input values to generate a machine-learned embedding, wherein the at least one layer comprises one or more weights and one or more activation functions; and
processing, by the computing system based at least in part on the one or more weights, the embedding to generate a saliency map.
